# EUROPEAN PATENT APPLICATION

(11) **EP 0 590 729 A1**
(43) Date of publication of application: **06.04.1994**
(21) Application number: 93202779.0
(22) Date of filing: 28.09.1993
(51) Int. Cl.: B29B 17/00, B27N 3/14, B27N 3/06

(54) **Production of sheet from polymer waste**

(30) Priority: 01.10.1992 EP 92308945
(71) Applicant: SHELL INTERNATIONALE RESEARCH MAATSCHAPPIJ B.V., NL-2596 HR Den Haag (NL)
(72) Inventor: van Breen, Adriaan Wouter, NL-1031 CM Amsterdam (NL); van Deursen, Josephus Hubertus, NL-1031 CM Amsterdam (NL); Hendriks, Petrus Anthonius Johannes Maria, NL-1031 CM Amsterdam (NL)

(57) **Abstract**

Production of a composite sheet material from reclaimed polymeric waste of mixed origin, which may contain up to 75% wt of non-thermoplastic material, in which the waste (5) is sintered and compressed (9) onto a layer of fibrous reinforcement (4,6), optionally with lamination of a polymer or metal film (3,7) onto one or both surfaces of the sheet (11).

## Description

This invention relates to the re-use of polymeric waste in the production of a reinforced composite sheet.

The recycling and re-use of polymeric waste is an important aspect of current industrial polymer waste management programmes. In addition to studies on the collection, separation and cleaning of polymeric materials from, e.g. municipal waste, it is important to develop effective processes for converting the reclaimed waste into resaleable outlets. Some applications have already been developed for specifically defined types of polymer, for example Wavin B.V. of The Netherlands produce household bags manufactured wholly from reclaimed polyethylene. However, when the polymer waste comprises a mixture of different polymers, and contains various undefined contaminants, as is usually the case in polymer waste material, it becomes very difficult to reprocess, e.g. by extrusion or injection moulding, into articles of commercially acceptable quality. Many attempts have been made to overcome these problems, including the deposition of granulated waste onto a conveyor, which transports it through an oven and then between compression rollers, to produce a board-like product (as described, for example, in U.K. patent specifications 1439353 and 2049540). However, such products usually exhibit various deficiencies in mechanical and aesthetic properties which limit the extent of their commercial application.

Applicant has now found that composite sheet of quality which permits versatile application can be obtained by incorporating a fibrous reinforcement into sintered polymeric waste. Accordingly, in one embodiment, the present invention provides a process for the production of a composite sheet from reclaimed polymer waste which comprises: juxtaposing particulate polymer waste containing at least 25% wt. thermoplastic material with fibrous reinforcement located on a support surface, heating the polymer waste-coated reinforcement to a temperature sufficient to soften the thermoplastic material, compressing the heated, coated reinforcement and cooling the resulting composite sheet, preferably under compression.

Naturally, a minimum level of thermoplastic component is necessary in order to achieve satisfactory coating of the fibrous reinforcement, and, as indicated above, this is effectively 25% wt. of the total polymer waste, whilst higher proportions of thermoplastic component, i.e. at least 40% wt., will usually give a better wetting of the fibrous reinforcement and thence more uniform properties in the final composite sheet material. One of the important advantages of this process is that it operates effectively when the polymer waste contains significant proportions of non-melting materials, which should be in the form of ground particles and may be inorganic such as sand or glass (fibres) or organic such as thermosetting resins (which usually contain inorganic fibres such as glass fibre), and in fact the mechanical properties of the product benefit from a minor amount of thermosetting resin. Preferably, therefore, the polymer waste contains, either initially or via supplemental addition, between 5% wt and 25% wt of thermosetting resin.

The actual chemical nature of the thermoplastic polymer waste, and of the thermosetting resin component (when present), may vary widely; this ability to process such a range of polymeric materials - largely irrespective of their actual chemical nature and origin - being one of the significant advantages of the present process. This polymer waste material is brought into particulate form by established techniques for comminution of waste, such as shredding, grinding or granulation. Preferably the particle size is less than 10 mm, suitably about 3-5 mm, with particularly good properties deriving from particles of flake form.

Any suitable fibrous material may be used for the reinforcement, but glass fibre has been found to yield composite sheet having particularly attractive physical properties. However, it is also possible to use fibrous materials of naturally occurring, organic, origin - which can enhance the environmental acceptability of the resulting product; examples of such naturally occurring fibrous material are flax and jute. The chosen fibrous material may be used in any convenient format; thus, it may be chopped, relatively short, fibres, or relatively long (in relation to the width of the composite sheet being formed). Also, it may be laid onto the support surface as loose fibres, or may be formed into a self-supporting mat - either by compacting into a non-woven mat or by formation of a woven mat.

When the polymer waste contains a high proportion of thermoplastic material, the sheet-forming conditions will usually cause sufficient impregnation and wetting of the fibrous reinforcement to produce a commercially useful product. However, the properties of that composite sheet can be enhanced by lamination (on one or both surfaces) with a film of metal or polymeric material, such lamination being particularly beneficial when the polymer waste does not flow freely under the sheet-forming conditions (eg as a consequence of low thermoplastic content). The use of a metal film laminate will often require an adhesive to bond together the metal and polymer waste core (although sometimes the thermoplastic material itself may provide sufficient adhesion), and will, of course, modify both the physical and visual properties of the resulting composite, laminated sheet. The use of a polymeric film will also affect the visual properties. However, a significant additional benefit from lamination is that the outer film serves to contain any loose fibres and also any chemical or biological contamination that may be present in the polymeric waste. For reasons of operational simplicity, it is normally preferred to use a thermoplastic polymer, e.g. a polyolefin such as polypropylene or polyethylene, for the film material.

A further modification of the process involves the use of two layers of fibrous reinforcement, conveniently but not necessarily of the same material, with the particulate polymeric waste being sandwiched between the two layers prior to heating and compression. In the preferred embodiment, this "twin-layer" variant is utilised in conjunction with lamination of a film (preferably thermoplastic) onto upper, lower, or both, surfaces(s) of the polymer-impregnated composite.

The process of this invention can be operated on a batch-type basis by the use of a compression mould into which the desired components are introduced in appropriate sequence. Thus, for a laminated "twin layer" composite sheet, the mould would be loaded with i) thermoplastic film; ii) fibrous reinforcement; iii) particulate polymeric waste; iv) second layer of fibrous reinforcement; and v) second thermoplastic film. This laminate assembly would then be consolidated by the application of pressure accompanied by heating to a temperature sufficient to soften the thermoplastic component of the polymeric waste.

A more convenient mode of operation is, however, the (semi) continuous process wherein the support surface is a belt which conveys the fibrous reinforcement and the particulate polymer waste juxtaposed therewith through a heated space, between compression rollers, and through a cooling zone. The conveyor belt may be continuous or chain sections linked together, and is usually of steel, through any other material meeting the requirements of flexibility/rigidity/heat resistance may be used. Also, it is often advantageous to have a non-stick coating (eg PTFE) on the upper surface of the belt, in order to aid release of the composite sheet from the conveyor belt. The heating and compression stages need not be physically isolated from each other, but may overlap. The cooling of the composite sheet will usually be carried out whilst maintaining compression, because this reduces any tendency of the fibrous reinforcement to expand (or "loft"). However, in some applications it may be more convenient to cool without pressure, and subsequently form the composite sheet into shaped articles by compression moulding.

This conveyor belt process can, of course, readily be adapted to the "twin layer" format by feeding a second layer of fibrous reinforcement onto the layer of polymeric waste deposited onto the first layer of fibrous reinforcement. Similarly, if an outer film is to be laminated onto the composite sheet, this may be through an "in-line" operation in which the film is fed directly onto the conveyor belt (if required on the under surface of the composite sheet), and/or onto the upper surface immediately prior to heating and compression. Alternatively, the laminating sheet(s) may be applied through a separate "off-line" lamination process.

The temperature of the heat treatment applied to the (laminar) composite should be sufficient to soften the thermoplastic component of the polymeric waste, and thereby enable it to flow around the reinforcement fibres and thence to wet them. The temperature should not of course, be so high as to cause significant thermal degradation of the polymer. Naturally, the exact temperature will depend on the components present in the polymeric waste material, and can be established for any chosen source of waste material by means of routine experimentation. In general, a suitable temperature will be between 140°C to 220°C, with 180°-200°C normally preferred. In general, higher pressures are more effective in producing better flow of polymer within the fibrous reinforcement, with enhanced wetting of the fibres, and also a flatter, more consistent sheet surface. However, operational and cost constraints normally impose a practical limit, and the pressure employed to consolidate the heated composite of fibrous mat impregnated with softened polymer will normally be several bar, pressures of 3-5 bar usually being effective.

A further embodiment of the invention relates to the actual product formed by the process described above, and is a composite sheet comprising a fibrous reinforcement impregnated with reclaimed polymer waste material containing at least 25% wt. thermoplastic material, and optionally laminated on one or both surfaces with a film of metal or thermoplastic polymer, suitably polyolefin, such as polypropylene or polyethylene.

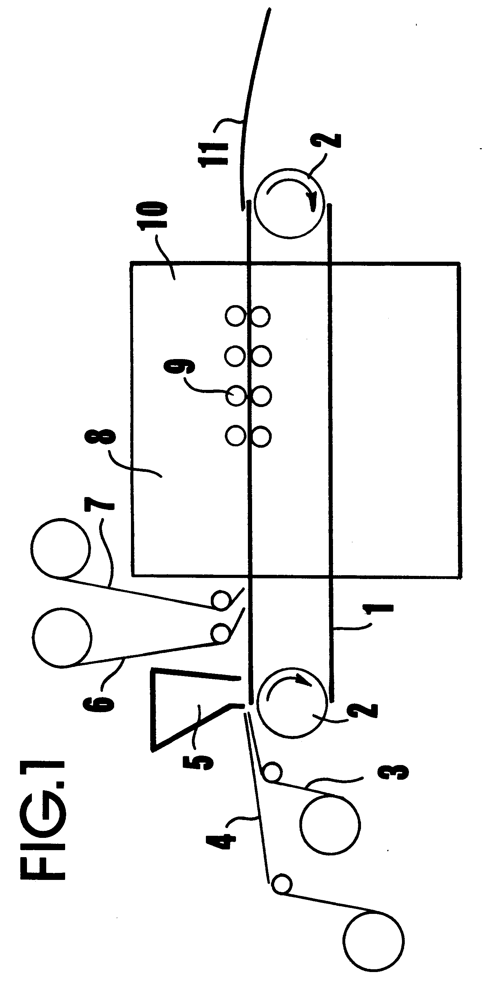

The invention is illustrated in the accompanying drawing Figure I which provides a diagrammatic representation of the embodiment wherein the particulate polymer waste is sandwiched between two layers of fibrous reinforcement, and the composite is laminated on both the upper and lower surfaces with a film of thermoplastic polymer.

Referring to Figure I, a conveyor belt 1, suitably of steel, is moved by transport rollers 2 in the direction indicated by the arrows. A film of thermoplastic polymer 3 is fed onto the conveyor belt, and a layer of fibrous reinforcement 4 fed onto that film 3. Particulate polymer waste, stored in hopper 5 is then deposited from hopper 5 onto the layer of reinforcement 4, and a second layer of fibrous reinforcement 6 is fed onto the upper surface of the polymer waste. Finally, a second film of thermoplastic polymer 7 is fed onto the upper surface of the second layer of reinforcement 6, and the resulting laminar product conveyed by belt 1 through a heated space 8, between compression rollers 9, and through cooling zone 10. The resulting laminated composite sheet 11 is then removed from conveyor belt 1 and either stored onto reels or cut into individual sheets according to established procedures. This composite sheet can then be formed into shaped articles by conventional stamping or moulding processes.

The continuous process described above is usually the most economic technique for commercially producing the reinforced composite sheet on a large scale, but as indicated earlier, it is also possible to produce the reinforced composite laminated product in a batchwise operation by means of successive inserts into a compression moulding press. That batchwise process was applied to produce composite laminates as described in the following examples, which serve to illustrate the invention.

### EXAMPLE

Granules were prepared from mixtures of polymers selected to simulate a variety of differing polymer "waste" raw materials, and also from commercially available mixed plastic wastes with either high or low polyolefin content. These were deposited onto a polypropylene film - supported layer of either glass fibre or of flax and covered with a second layer and film of the same materials. This laminate assembly was consolidated for 10 minutes at 200°C and a pressure of about 4 bar in a pre-heated moulding press, and then cooled to room temperature (without releasing pressure). Similar laminates were also produced using stainless steel covers in place of the polypropylene films with an adhesive of acrylic acid - modified polypropylene ("Polybond" 1001). The flexural strength and flexural modulus was measured according to ASTM D-790M. The results of these tests are tabulated below, together with, for comparative purposes, the corresponding properties of virgin polyethylene, polypropylene, and glass fibre-reinforced polypropylene sheet commercially available from Symalit as "GM 30 PP".

In the following Table, the different components (as % wt.) of the polymer waste are as follows:
- REPOWA 1:-: Low density polyethylene 42.5% wt.
Polypropylene 34% wt.
Polystyrene 8.5% wt.
Sheet Moulding Compound ("SMC" Thermosetting resin, from Citroen car bonnet) 15% wt.
- REG. 1:-: Coarsely shredded high polyolefin content waste from de Vries, Heerhugowaard
- REG. 1B:-: as for REG 1 plus 15% wt SMC
- RECYCL:-: A "heavy fraction" waste from AKW, being the residue after granulating, cleaning and flotation separation of (mainly bottle) domestic waste; having low polyolefin content and being predominantly in "flake" form.

**Table**

| Flexural Properties | | | | | | |
|---|---|---|---|---|---|---|
| Polymer Type | Fibre Type | Lamination | Sheet Thickness (mm) | Modulus (GPa) | Strength (MPa) | Strain at Break (%) |
| LDPE | - | - | - | 0.2-0.4 | 7-10 | >5 |
| PP | - | - | - | 1.2-1.7 | 40-50 | >5 |
| Glass Fibre Composite | | PP | | 3.8 | 88 | 3.7 |
| REPOWA 1 | Glass | PP | 3.8 | 3.1 | 58 | 3.6 |
| REPOWA 1 | " | PP | 6.1 | 3.2 | 49 | 3.0 |
| REPOWA 1 | " | PP | 6.2 | 3.0 | 50 | 3.2 |
| REPOWA 1 | Flax | PP | 6.5 | 4.5 | 43 | 2.6 |
| REPOWA 1 | Glass | None | 5.9 | 4.2 | 54 | 2.5 |
| REG 1 | Glass | PP | 5.6 | 3.1 | 32 | 2.1 |
| REG 1B | Glass | PP | 6.1 | 3.4 | 55 | 3.3 |
| RECYCL | Glass | PP | 5.5 | 4.9 | 67 | 2.1 |

## Claims

1. Process for the production of a composite sheet from reclaimed polymer waste which comprises: juxtaposing particulate polymer waste containing at least 25% wt. thermoplastic material with a fibrous reinforcement located on a support surface; heating the polymer waste-coated reinforcement to a temperature sufficient to soften the thermoplastic material; compressing the heated, coated reinforcement and cooling the resulting composite sheet.

2. Process as claimed in claim 1 wherein the polymer waste contains, either initially or via supplemental addition, thermosetting resin and/or inorganic materials in an amount between 5% wt and 25% wt.

3. Process as claimed in claim 1 or 2 wherein the layer of fibrous reinforcement is glass fibre or flax or other naturally occurring fibrous product.

4. Process as claimed in claim 1, 2 or 3 wherein a second layer of fibrous reinforcement is deposited on the polymer waste-coated reinforcement.

5. Process as claimed in any one of the preceding claims wherein a film of polymer or metal is laminated onto at least one surface of the polymer-coated reinforcement.

6. Process as claimed in any one of the preceding claims wherein the support surface is a belt which conveys the fibrous reinforcement and the polymer waste juxtaposed therewith through a heated space, between compression rollers, and through a cooling zone.

7. Process as claimed in any one of the preceding claims wherein the heating is carried out at a temperature between 140-220°C for a period sufficient to soften the thermoplastic, and the compression is effected at a pressure of at least 3 bar.

8. Composite sheet prepared by a process as claimed in any one of claims 1 to 7.

9. Composite sheet comprising a fibrous reinforcement impregnated with reclaimed polymer waste material containing at least 25% wt thermoplastic material.

10. Composite sheet as claimed in claim 9 comprising additionally an outer film of thermoplastic polymer on both upper and lower surfaces.
